# EUROPÄISCHE PATENTSCHRIFT

(11) **EP 1 177 871 B1**
(45) Veröffentlichungstag und Bekanntmachung des Hinweises auf die Patenterteilung: **25.04.2007**
(21) Anmeldenummer: 01116789.7
(22) Anmeldetag: 23.07.2001
(51) Int. Cl.: B29C 70/38, B29C 67/24, B29B 7/90

(54) **Verfahren und Vorrichtung zum Herstellen von mit Langfasern verstärkten Kunststoff-Formteilen**
Method and apparatus for manufacturing plastic parts reinforced with long fibres
Procédé et dispositif pour la fabrication des articles en matière plastique renforcée par des fibres longues

(30) Priorität: 03.08.2000 DE 10037773
(43) Veröffentlichungstag der Anmeldung: 06.02.2002
(73) Patentinhaber: Hennecke GmbH, 51379 Leverkusen (DE)
(72) Erfinder: Wirth, Jürgen, 51147 Köln (DE); Pawlik, Wolfgang, 50735 Köln (DE)
(74) Vertreter: Feldhues, Michael L.F.

(56) Entgegenhaltungen:
- DE-A- 19 618 393
- GB-A- 1 469 533
- US-A- 3 669 328
- US-A- 4 637 229
- US-A- 5 338 169

## Beschreibung

Die Erfindung betrifft ein Verfahren gemäß dem Anspruch 1 und eine Vorrichtung gemäß dem Anspruch 5 zum Herstellen von mit Langfasem verstärkten Kunststoff-Formteilen. DE-A1-196 18 393 offenbart ein Verfahren gemäß dem Oberbegriff des Anspruchs 1, wobei ein Endlosfaden bzw. Roving von einem Coil abgezogen, über ein Rohrleitungssystem zu einem Schneidwerk gefördert, hier in endliche, Langfasern bildende Abschnitte geschnitten, diese Langfasern über einen Förderkanal einem fließfähigen, einen festen Kunststoff bildenden Strom zugeführt und mit ihm vereinigt werden, wobei dieser Strom in ein Formwerkzeug eingetragen, dieses verschlossen und nach dem Aushärten das fertige Formteil entformt wird. US-A-5 338 169 offenbart eine Vorrichtung gemäß dem Oberbegriff des Anspruchs 5.

Es ist allgemein bekannt, mit Langfasern verstärkte Kunststoff-Formteile dadurch herzustellen, dass Langfasern in eine flüssige Kunststoffschmelze vor deren Aushärten oder in ein fließfähiges Reaktionsgemisch vor dessen Ausreagieren homogen verteilt eingebracht werden.

Unter Langfasern versteht man dabei solche, welche als Endlosfäden oder Rovings, insbesondere Glasfaser-Rovings, zugeführt und kurz vor dem Einbringen in die Kunststoffschmelze bzw. in das fließfähige Reaktionsgemisch auf eine endliche Länge von vorzugsweise mehr als 10 mm geschnitten werden (DE 196 18 393 A1, WO 98/01274,WO 96/35562). Die Enden der auf Coils aufgewickelten Endlosfäden oder Rovings werden miteinander unter Spleißen verknüpft, damit beim Abziehen keine Unterbrechung stattfindet. Die Zufuhr des Endlosfadens oder Rovings erfolgt dabei von der Lagerstelle der Coils gegebenenfalls teilweise durch den freien Raum bzw. durch ein Rohrleitungssystem. An mindestens einer Stelle ist in diesem Rohrleitungssystem eine Förderluftzufuhr angeordnet. Mit dieser Förderluft wird der Endlosfaden pneumatisch zum Schneidwerk gefördert. Auch die abgeschnittenen Endlosfäden fördert man in der Regel pneumatisch weiter, um sie in den Strom aus flüssigem Kunststoff einzugeben.

GB-A-1 469 533 lehrt ein Verfahren und eine Vorrichtung zur Verarbeitung von Textilfäden, bei dem die Fäden zu einer Station gezogen werden, in der sie dann aufgewickelt, gewoben oder gestrickt oder in anderer Weise im Ganzen weiterverarbeitet werden. GB-A-1 469 533 lehrt in diesem Zusammenhang, dass der Faden durch Luftströmung entgegen der Förderrichtung pneumatisch unter Spannung gehalten wird.

Es ist zwar möglich, das erhaltene Gemenge in primitiver Weise von Hand in der unteren Formhälfte zu verteilen, was aber den technischen Anforderungen an das herzustellende Formteil meist nicht genügt. Zum Einbringen einer mit Langfasern versetzten flüssigen Kunststoffschmelze oder eines Reaktionsgemisches in ein offenes Formwerkzeug bedient man sich deshalb in aller Regel einer programmgesteuerten Eintragsvorrichtung, z. B. eines Roboters, welche das erhaltene Gemenge gleichmäßig in der unteren Formhälfte verteilt. Anschließend wird das Formwerkzeug mit der oberen Formhälfte verschlossen und verriegelt. Das Formteil erhärtet darin und wird danach entformt.

Dieses Verfahren zeigt insbesondere zwei Probleme: Zum einen wird beim Verteilen des Gemenges im Formhohlraum durch die Bewegung der Eintragsvorrichtung einmal mehr und einmal weniger an Langfasern benötigt. Entsprechend schwankt auch der Bedarf an dem zugeführten Endlosfaden bzw. Roving. Zum zweiten wird durch die diskontinuierliche Arbeitsweise die Zufuhr bzw. Förderung nicht nur der Langfasem, sondern auch des Endlosfadens oder Rovings von Formfüllung zu Formfüllung unterbrochen. Dadurch wird der Endlosfaden häufig nicht so schnell abgebremst wie erwünscht, und es bilden sich Schlaufen. Um solche zu vermeiden, ist die Verwendung von Spannrollen bekannt. Beim Einbringen von Langfasern in flüssige Kunststoffschmelzen mit nicht zu kurzer Erstarrungszeit ist eine Abzugsgeschwindigkeit des Endlosfadens von 0,5 bis ca. 2 m/s üblich, wodurch das Verfahren zwar meist gerade noch ohne zu große Probleme abläuft. Störungen, wie beispielsweise durch Reißen des Endlosfadens, sind aber nicht auszuschließen.

Es besteht die Aufgabe, ein Verfahren und eine Vorrichtung zu schaffen, womit man bei der Herstellung von mit Langfasern verstärkten Kunststoff-Formteilen eine störungsfreie Zufuhr des Endlosfadens oder Rovings insbesondere auch bei höheren Abzugsgeschwindigkeiten sicherstellt.

Das neue Verfahren löst diese Aufgabe dadurch, dass der Endlosfaden bzw. Roving im Rohrleitungssystem entgegen der Förderrichtung ständig pneumatisch unter Spannung gehalten wird.

Dadurch wird erreicht, dass sich beim Abbremsen des Endlosfadens nach erfolgter Formfüllung keine Schlaufen bilden können. Und andererseits vermeidet die stets anliegende Fadenspannung beim erneuten Anfahren für die nächste Formfüllung eine ruckartige Beanspruchung des Endlosfadens, welche zum Abreißen führen könnte. Auch bei der Bewegung der Eintragsvorrichtung bleibt der Endlosfaden in vorteilhafter Weise stets pneumatisch gespannt.

Diese neue Verfahrensweise verbessert die Herstellung von mit Langfasern verstärkten Formteilen bereits bei den bekannten niedrigen Abzugsgeschwindigkeiten des Endlosfadens wesentlich. Bei höheren Abzugsgeschwindigkeiten ist sie für einen reibungslosen Betrieb unerlässlich.

Gemäß einer besonderen Durchführungsform des neuen Verfahrens wird der Endlosfaden im ersten Teil der Führung in einem starren Rohrleitungssystem gefördert und in einem zweiten Teil der Führung in einem mit einer gesteuerten Eintragsvorrichtung bewegten Leitungssystem weitergeführt, wobei der Endlosfaden in diesem Leitungssystem nur durch Förderung in Richtung einer an der Eintragsvorrichtung angeordneten Fördervorrichtung gespannt wird.

Es hat sich gezeigt, dass in diesem letzten, relativ kurzen, mit der Eintragsvorrichtung bewegten Leitungssystem bis zum Schneidwerk die Gefahr der Schlaufenbildung nicht mehr besteht, so dass für das Spannen des Endlosfadens hier die Fördervorrichtung allein ausreicht. Gegebenenfalls wird hier zusätzlich Förderluft zum Spannen des Endlosfadens in Förderrichtung eingeführt.

Vorzugsweise wird der einen festen Kunststoff bildende Strom in Form eines eine kurze Reaktionsstartzeit aufweisenden flüssigen Reaktionsgemisches zugeführt.

Wie bereits ausgeführt, werden bei den üblichen Kunststoffschmelzen die Endlosfäden allgemein mit einer Abzugsgeschwindigkeit von 0,5 bis ca. 2,0 m/s zugeführt.

In vorteilhafter Weise werden nach dem neuen Verfahren die Endlosfäden mit einer Geschwindigkeit von mindestens 2,0 m/s zugeführt.

Bei höheren Abzugsgeschwindigkeiten wird nämlich nicht nur beim Abbremsen des Endlosfadens die Gefahr der Schlaufenbildung wesentlich erhöht, sondern beim erneuten Anfahren wird nach der Auflösung der Schlaufen der Endlosfaden plötzlich ruckartig gezogen. Dabei bilden insbesondere die meist durch Spleißen gebildeten Verbindungsstellen des Endes eines Coils mit dem Anfang des nächsten Coils Schwachstellen, an welchen der Endlosfaden bevorzugt reißen kann. Gerade hierfür erweist sich das neue Verfahren durch permanentes Spannen des Endlosfadens als besonders vorteilhaft. Bei der Herstellung von Formteilen aus Reaktionsgemischen, wie beispielsweise aus Isocyanat und Polyol zur Erzeugung von Polyurethanschaumstoff-Fomteilen, müssen nämlich Abzugsgeschwindigkeiten von über 2,0 m/s bis etwa 15 m/s angewendet werden, damit der Eintrag der Langfasern noch vor Ablauf der Reaktionsstartzeit dieses Reaktionsgemisches erfolgt, damit die Langfasern sich darin homogen verteilen lassen. In gleicher Weise ist die Anwendung des neuen Verfahrens auch bei der Verarbeitung von schnell erstarrenden Kunststoffschmelzen von Vorteil. Denn in beiden Fällen müssen die Langfasern schnell eingebracht werden. Bei Kunststoffschmelzen muss der Eintrag der Langfasern noch während der flüssigen Phase erfolgen.

Die neue Vorrichtung zum Herstellen von mit Langfasern verstärkten Kunststoff-Formteilen in einem Formwerkzeug geht aus von einer Lagerstelle für Coils aus Endlosfäden oder Rovings, von welcher eine Führung für den Endlosfaden von der Lagerstelle bis zu einer bewegungsgesteuerten Eintragsvorrichtung für einen einen festen Kunststoff bildenden flüssigen Strom führt und an einem Schneidwerk mit Fördervorrichtung endet, wobei die Führung für den Endlosfaden oder Roving mindestens teilweise aus einem starren Rohrleitungssystem besteht.

Das Neue ist darin zu sehen, dass das starre Rohrleitungssystem mindestens einen der Förderrichtung entgegengerichteten Lufteinlass zum pneumatischen Spannen des Endlosfadens oder Rovings aufweist.

Die räumliche Führung für den Endlosfaden oder Roving kann zwar teilweise auch aus Ösen bestehen, durch welche er sozusagen frei durch den Raum geführt ist. Für das pneumatische Spannen des Endlosfadens bzw. Rovings entgegen der Förderrichtung ist aber ein Rohrleitungssystem unerlässlich, damit der Luftstrom zum pneumatischen Spannen zwangsgeführt ist. Dadurch wird erst ermöglicht, dass der Endlosfaden bzw. Roving immer, d.h. auch während der Pausenzeiten zwischen zwei Formfüllvorgängen, gespannt bleibt bzw. zu Beginn des nächsten Formfüllvorganges unter pneumatischer Spannung ist. Wenn gegen Ende des Formfüllens die Förderung unterbrochen wird, kommt die Fördervorrichtung verzögert zum Stillstand. Weil während dieser Zeit die Förderung des Endlosfadens bzw. Rovings noch nachläuft, könnten sich im Rohrleitungssystem Schlaufen bilden. Diese werden aber durch das Spannen vermieden. Beim erneuten Anlaufen des Schneidwerkes bzw. der Fördervorrichtung würde bei einem ungespannten Endlosfaden bzw. Roving nach dem Aufbrauchen gebildeter Schlaufen ein plötzlicher Ruck entstehen, welcher insbesondere an Verbindungsstellen von Fadenenden zum Abreißen führen könnte. Beide Erscheinungen, welche insbesondere bei höheren Abzugsgeschwindigkeiten des Endlosfadens oder Rovings auftreten, werden durch die permanente pneumatische Fadenspannung vermieden.

Gemäß einer vorteilhaften Ausführungsform der neuen Vorrichtung besteht die Führung des Endlosfadens oder Rovings an der bewegungsgesteuerten Eintragsvorrichtung aus einem biegsamen Führungsschlauch, welcher an das starre Rohrleitungssystem anschließt.

Diese Ausführungsform ermöglicht es, dass sich der Führungsschlauch den Bewegungen der Eintragsvorrichtung anpasst.

Gemäß einer weiteren Variante ist der an der Eintragsvorrichtung angeordnete Teil der Führung vom restlichen starren Rohrleitungssystem getrennt und weist an seinem Eingang einen Trichter auf, in welchen der Endlosfaden während des Formfüllvorganges einläuft.

Dabei ist der an der Eintragsvorrichtung angeordnete Teil der Führung entweder als starres Führungsrohr oder als biegsamer Führungsschlauch ausgebildet. Der Trichter hat dabei einen solchen Durchmesser, dass dieser auch bei einer Extremstellung bzw. -bewegung der Eintragsvorrichtung den ankommenden Endlosfaden oder Roving auffängt.

Besteht die Führung an der Eintragsvorrichtung aus einem biegsamen Führungsschlauch, ist dieser vorzugsweise mit dem starren Rohrleitungssystem verbunden und weist eine Länge auf, welche die Bewegungen der Eintragsvorrichtung ausgleicht.

Dadurch ist eine konstruktiv günstige Ausführungsform gegeben, zumal sich ein verschlissener Führungsschlauch mit wenigen Handgriffen austauschen lässt.

In der Regel ist es unvermeidlich, dass das starre Rohrleitungssystem Rohrbögen aufweist.

In diesem Falle ist vorzugsweise zumindest hinter einem der Rohrbögen ein weiterer Lufteinlass zum pneumatischen Spannen des Endlosfadens oder Rovings angeordnet.

Dadurch wird verhindert, dass sich der Endlosfaden oder Roving in den Rohrbogen einschleift.

Vorzugsweise weist die Führung mindestens einen Förderlufteinlass auf.

Dadurch wird erreicht, dass beim Rüstbetrieb das mühselige Einfädeln des Endlosfadens bzw. Rovings von Hand entfällt und problemlos durch die pneumatische Förderluft erfolgt, bis ihn die Fördervorrichtung am Schneidwerk erfasst. Während des Rüstbetriebes ist ein pneumatisches Fadenspannen entgegen der Förderrichtung nicht erforderlich, und während des normalen Betriebes beim Formfüllen ist eine pneumatische Förderung nicht unbedingt notwendig.

Vorzugsweise weist das Ende des starren Rohrleitungssystems ein Teleskoprohr auf, welches bei Rüstbetrieb bis auf den nachfolgenden Trichter ausfahrbar ist.

Diese Ausführungsform ist beim Einfädeln in Verbindung mit einem Förderlufteinlass des Rohrleitungssystems besonders vorteilhaft, damit der Endlosfaden oder Roving ohne Schwierigkeiten bis zum Schneidwerk gefördert wird, bis ihn die dort angeordnete Fördervorrichtung erfasst. Auch hier ist beim Rüstbetrieb kein Spannen des Endlosfadens bzw. Rovings erforderlich.

In der Zeichnung ist die neue Vorrichtung in zwei Ausführungsbeispielen dargestellt und nachstehend näher beschrieben. Es zeigen:
- Fig. 1: die Vorrichtung im Schema in der Seitenansicht,
- Fig. 2: die Einzelheit A in Fig. 1 in vergrößertem Maßstab,
- Fig. 3: die Eintragsvorrichtung und den Übergang vom Ende des starren Rohrleitungssystems gemäß Fig. 1 in vergrößertem Maßstab und
- Fig. 4: eine andere Ausführungsform des Überganges vom Ende des starren Rohrleitungssystems.

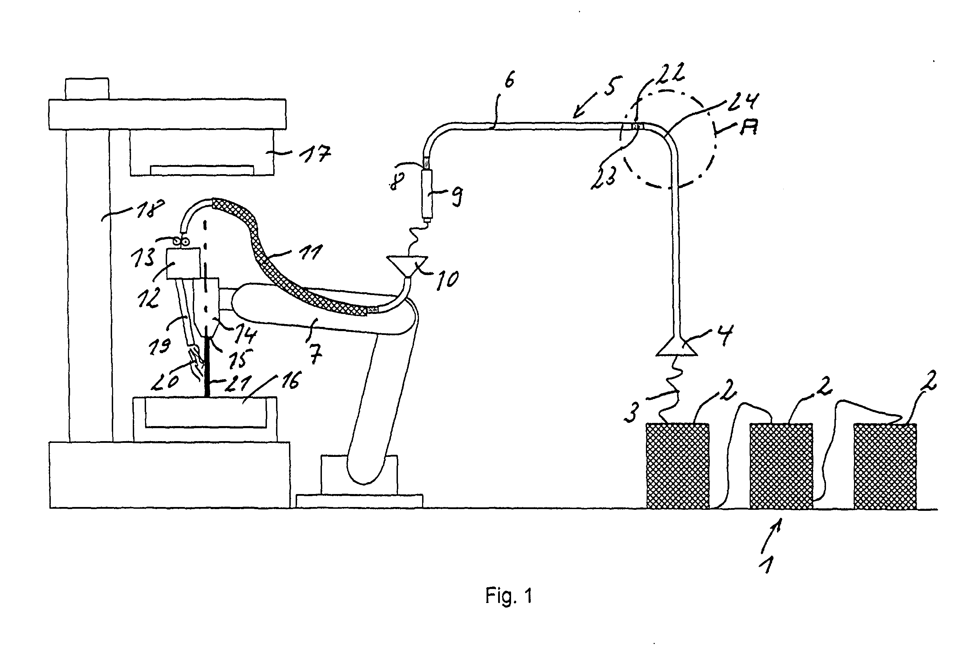

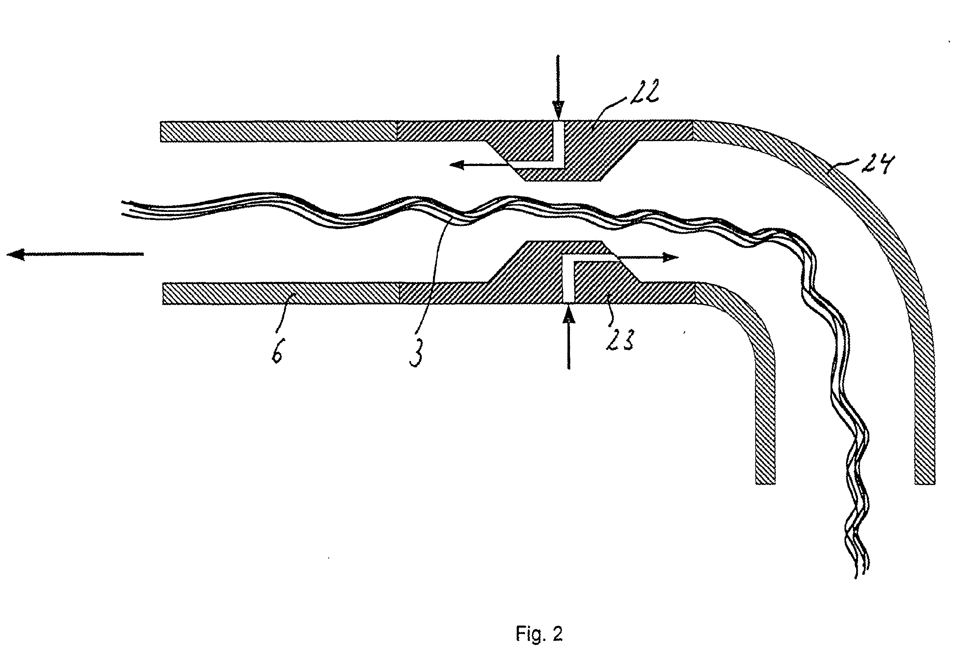

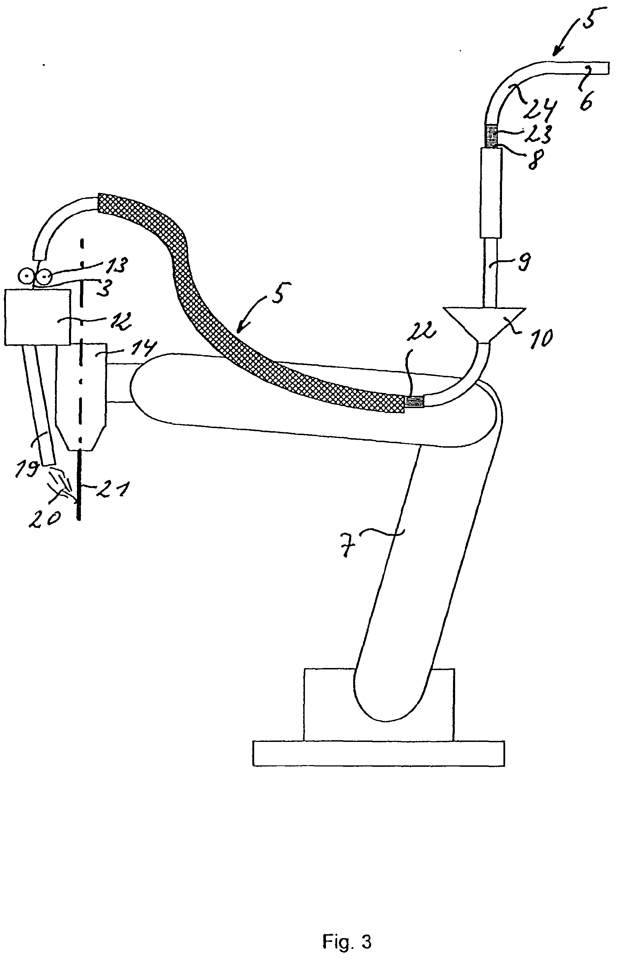

In Fig. 1 bis 3 besteht die Vorrichtung aus einer Lagerstelle 1 für mehrere Coils 2 aus Endlosfaden 3 in Form von Glasfaserrovings. Ein Endlosfaden 3 gelangt über einen Trichter 4 in eine Führung 5, deren erster Teil aus einem starren Rohrleitungssystem 6 besteht, welches durch den freien Raum zu einer gesteuert bewegbaren und seitlich ausschwenkbaren Eintragsvorrichtung 7 führt. Am Austrittsende 8 des starren Rohrleitungssystems 6 ist ein Teleskoprohr 9 angeordnet, welches im Rüstbetrieb bis auf einen Trichter 10 absenkbar ist. Der Trichter 10 hat einen solchen Durchmesser, dass der ankommende Endlosfaden 3 auch bei Extrembewegungen der Eintragsvorrichtung 7 stets aufgefangen wird. An diesen Trichter 10 anschließend ist die Führung 5 als biegsamer Führungsschlauch 11 ausgebildet und führt zu einem Schneidwerk 12, welches mit einer Fördervorrichtung 13 versehen ist. Die Eintragsvorrichtung 7 ist mit einem Mischkopf 14 für die einen Schaumstoff bildenden Reaktionskomponenten Polyol und Isocyanat ausgestattet. Die hinlänglich bekannten Zuführungen dieser Reaktionskomponenten sind nicht dargestellt. Der Mischkopf 14 besitzt eine Auslassöffnung 15, welche in die untere Formhälfte 16 eines offenen Formwerkzeuges weist. Die obere Formhälfte 17 ist an einem Führungsschaft 18 absenkbar gehalten. Vom Schneidwerk 12 führt ein Führungsrohr 19 für die vom Endlosfaden 3 abgeschnittenen Langfasern 20 in Richtung des aus der Auslassöffnung 15 austretenden Stromes 21 des Reaktionsgemisches. Sowohl das starre Rohrleitungssystem 6 als auch der biegsame Führungsschlauch 11 weisen Förderlufteinlässe 22 auf, welche in Förderrichtung weisen. Das starre Rohrleitungssystem 6 ist außerdem mit Spannlufteinlässen 23 versehen.

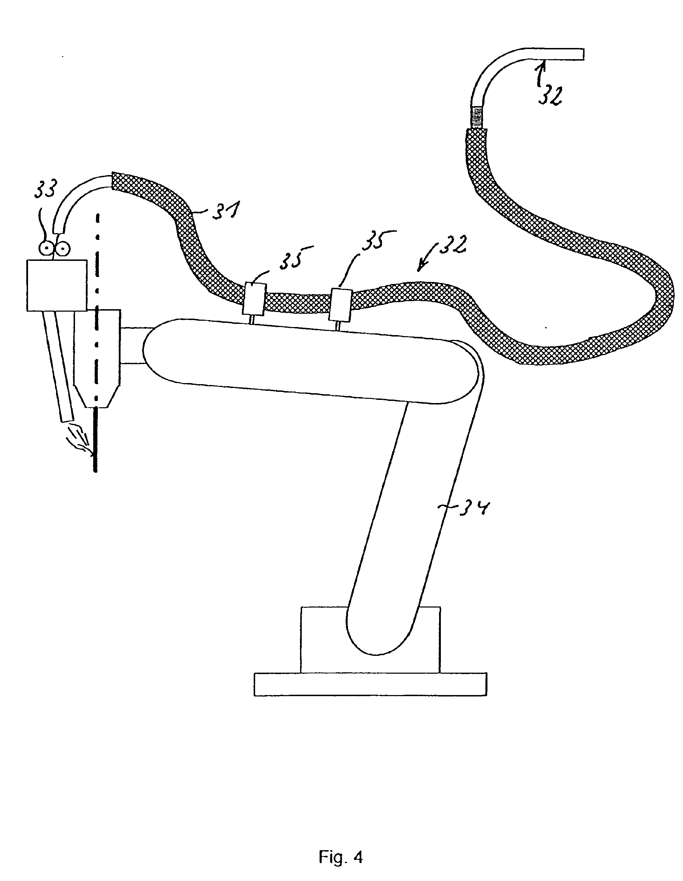

Die Vorrichtung gemäß Fig. 4 ist genauso wie jene gemäß Fig. 1 bis 3 aufgebaut, jedoch mit der dargestellten Abweichung, dass die als biegsamer Führungsschlauch 31 ausgebildete Führung 32 für den Endlosfaden 33 bzw. Roving derart an der Eintragsvorrichtung 34 mittels Halterungsösen 35 angeordnet ist und so lang ist, dass dieser Führungsschlauch 31 auch die Extrembewegungen der Eintragsvorrichtung 34 ausgleichen kann. Dabei schließt dieser biegsame Führungsschlauch unmittelbar an das starre Rohrleitungssystem 35 an.

### Verfahrensbeispiel:

Gewählt wird die Vorrichtung gemäß Fig. 1 bis 3. Zur Inbetriebnahme, d.h. beim Rüstbetrieb, wird der Endlosfaden 3 bei eingeschalteter Förderlutlzufuhr von Hand in den Trichter 4 eingeführt, vom Luftstrom erfasst und gefördert, bis er von der Fördervorrichtung 13 am Schneidwerk 12 erfasst wird. Dann wird die pneumatische Förderluft abgeschaltet und auf den Formfüllvorgang umgeschaltet. D.h., im Mischkopf 14 wird im Durchlauf im sogenannten Schussverfahren ein Reaktionsgemisch aus Polyol und Isocyanat für eine Formfüllung erzeugt. Dieses besitzt eine Reaktionsstartzeit von etwa 15 Sekunden. Innerhalb dieser Zeit müssen die vom Schneidwerk 12 abgeschnittenen Langfasern 20 von 15 mm Länge in den Gemischstrom in der gewünschten Menge von 25 Masseprozent im fertigen Formteil eingebracht werden. Deshalb wird der Endlosfaden 3 mit einer Abzugsgeschwindigkeit von 4,0 m/s zugeführt. Dabei wirkt dem Fördervorgang ein Luftstrom zum permanenten Spannen des Endlosfadens 3 mit einer Kraft von 1,5 N entgegen. Die Eintragsvorrichtung 7 wird dabei in ihrer Bewegung programmgesteuert, damit das Eintragen in die untere Formhälfte 16 homogen erfolgt. Ist die untere Formhälfte 16 gefüllt, werden sowohl der Mischkopf 14 als auch die Fördervorrichtung 13 abgeschaltet. Dabei wird ein Nachlaufen des Endlosfadens 3, welches unerwünschte Schlaufen bilden könnte, durch dessen Spannen vermieden. Die Eintragsvorrichtung 7 wird seitlich herausgeschwenkt und die obere Formhälfte 17 abgesenkt, auf die untere Formhälfte 16 aufgesetzt und beide miteinander verriegelt. Nach dem Aushärten wird das mit Langfasem 20 verstärkte Formteil entformt. Für den nächsten Formfüllvorgang laufen dann sowohl die Fördervorrichtung 13, das Schneidwerk 12 als auch die Erzeugung des Reaktionsgemisches im Mischkopf 14 wieder an. Da die Fördervorrichtung 13 beim Anlaufen beschleunigt wird und der Endlosfaden 3 unter Spannung steht, wird ein plötzlicher Ruck, bei welchem der Endlosfaden 3 abreißen könnte, verhindert. Die folgenden Formfüllvorgänge laufen dann in gleicher Weise ab.

## Patentansprüche

1. Verfahren zum Herstellen von mit Langfasern (20) verstärkten Kunststoff-Formteilen, wobei ein Endlosfaden (3) bzw. Roving von einem Coil (2) abgezogen, über eine Führung (5) zu einem Schneidwerk (12) gefördert, hier in endliche, Langfasern (20) bildende Abschnitte geschnitten, diese Langfasern (20) über ein Führungsrohr (19) einem fließfähigen, einen festen Kunststoff bildenden Strom (21) zugeführt und mit ihm vereinigt werden, wobei dieser Strom (21) in ein Formwerkzeug (16, 17) eingetragen, dieses verschlossen und nach dem Aushärten das fertige Formteil entformt wird, **dadurch gekennzeichnet, dass** der Endlosfaden (3) bzw. Roving in der Führung (5) entgegen der Förderrichtung ständig pneumatisch unter Spannung gehalten wird.

2. Verfahren nach Anspruch 1, **dadurch gekennzeichnet, dass** der Endlosfaden (3) im ersten Teil der Führung (5) in einem starren Rohrleitungssystem (6) gefördert wird und im zweiten Teil der Führung (5) in einem mit einer gesteuerten Eintragsvorrichtung (7, 34) bewegten Leitungssystem (11) weitergeführt wird, wobei der Endlosfaden (3) in diesem Leitungssystem (11) nur durch Förderung in Richtung einer an der Eintragsvorrichtung (7, 34) angeordneten Fördervorrichtung (13) gespannt wird.

3. Verfahren nach den Ansprüchen 1 oder 2, **dadurch gekennzeichnet, dass** der einen festen Kunststoff bildende Strom (21) in Form eines eine kurze Reaktionsstartzeit aufweisenden flüssigen Reaktionsgemisches zugeführt wird.

4. Verfahren nach den Ansprüchen 1, 2 oder 3, **dadurch gekennzeichnet, dass** der Endlosfaden (3) mit einer Abzugsgeschwindigkeit von mindestens 2,0 m/s abgezogen wird.

5. Vorrichtung zum Herstellen von mit Langfasern (20) verstärkten Kunststoff-Formteilen in einem Formwerkzeug, bestehend aus einer Lagerstelle (1) für Coils (2) aus Endlosfäden (3) oder Rovings, von welcher eine Führung (5) für den Endlosfaden (3) von der Lagerstelle (1) bis zu einer bewegungsgesteuerten Eintragsvorrichtung (7, 34) für einen einen festen Kunststoff bildenden flüssigen Strom (21) führt und an einem Schneidwerk (12) mit Fördervorrichtung (13) endet, wobei die Führung (5) für den Endlosfaden (3) oder Roving mindestens teilweise aus einem starren Rohrleitungssystem (6) besteht, **dadurch gekennzeichnet, dass** das starre Rohrleitungssystem (6) mindestens einen der Förderrichtung entgegengerichteten Spannlufteinlass (23) zum pneumatischen Spannen des Endlosfadens (3) oder Rovings aufweist.

6. Vorrichtung nach Anspruch 5, **dadurch gekennzeichnet, dass** die Führung (5) des Endlosfadens (3) oder Rovings an der bewegungsgesteuerten Eintragsvorrichtung (7) aus einem biegsamen Führungsschlauch (11) besteht, welcher an das starre Rohrleitungssystem (6) anschließt.

7. Vorrichtung nach Anspruch 5, **dadurch gekennzeichnet, dass** der an der Eintragsvorrichtung (7) angeordnete Teil der Führung (5) vom starren Rohrleitungssystem (6) getrennt ist und dass sein Eingang einen Trichter (10) aufweist, in welchen der Endlosfaden (3) während des Formfüllvorganges einläuft.

8. Vorrichtung nach Anspruch 6, **dadurch gekennzeichnet, dass** der biegsame Führungsschlauch (31) mit dem starren Rohrleitungssystem (32) verbunden ist und eine Länge aufweist, welche die Bewegungen der Eintragsvorrichtung (34) ausgleicht.

9. Vorrichtung nach den Ansprüchen 5 bis 8, wobei das starre Rohrleitungssystem (5) Rohrbögen (24) aufweist, **dadurch gekennzeichnet, dass** zumindest hinter einem der Rohrbögen (24) ein weiterer Spannlufteinlass (23) zum Spannen des Endlosfadens (3) oder Rovings angeordnet ist.

10. Vorrichtung nach den Ansprüchen 5 bis 7 oder 9, **dadurch gekennzeichnet, dass** die Führung (5) mindestens einen Förderlufteinlass (22) aufweist.

11. Vorrichtung nach den Ansprüchen 7 und 10, **dadurch gekennzeichnet, dass** das Ende des starren Rohrleitungssystems (6) ein Teleskoprohr (9) aufweist, welches bei Rüstbetrieb bis auf den nachfolgenden Trichter (10) ausfahrbar ist.

## Claims

1. Process for the production of mouldings of plastic reinforced with long fibres (20), wherein a continuous thread (3) or roving is taken off from a coil (2), conveyed via a guide (5) to a cutting unit (12) and cut here into finite sections which form long fibres (20), and these long fibres (20) are fed via a guide tube (19) to a free-flowing stream (21) which forms a solid plastic and are combined with it, this stream (21) being introduced into a mould (16, 17), the mould being closed and the finished moulding being removed from the mould after curing, **characterized in that** the continuous thread (3) or roving in the guide (5) is constantly kept pneumatically under tension against the conveying direction.

2. Process according to claim 1, **characterized in that** the continuous thread (3) is conveyed in a rigid pipeline system (6) in the first part of the guide (5) and passed further in the second part of the guide (5) in a line system (11) moved with a controlled introducing device (7, 34), the continuous thread (3) in this line system (11) being tensioned only by conveying in the direction of a conveying device (13) arranged on the introducing device (7, 34).

3. Process according to claims 1 or 2, **characterized in that** the stream (21) which forms a solid plastic is fed in the form of a liquid reaction mixture which has a short reaction start time.

4. Process according to claims 1, 2 or 3, **characterized in that** the continuous thread (3) is taken off with a take-off speed of at least 2.0 m/s.

5. Device for the production of mouldings of plastic reinforced with long fibres (20) in a mould, comprising a bearing seat (1) for coils (2) of continuous threads (3) or rovings, from which a guide (5) for the continuous thread (3) leads from the bearing seat (1) to a movement-controlled introducing device (7, 34) for a liquid stream (21) which forms a solid plastic and ends at a cutting unit (12) with a conveying device (13), the guide (5) for the continuous thread (3) or roving at least partly comprising a rigid pipeline system (6), **characterized in that** the rigid pipeline system (6) has at least one tensioning air inlet (23) directed against the conveying direction for pneumatic tensioning of the continuous thread (3) or roving.

6. Device according to claim 5, **characterized in that** the guide (5) of the continuous thread (3) or roving on the movement-controlled introducing device (7) comprises a flexible guide hose (11) connected to the rigid pipeline system (6).

7. Device according to claim 5, **characterized in that** the part of the guide (5) arranged on the introducing device (7) is separated from the rigid pipeline system (6), and **in that** its intake has a funnel (10), into which the continuous thread (3) runs during the mould filling oration.

8. Device according to claim 6, **characterized in that** the flexible guide hose (31) is connected to the rigid pipeline system (32) and has a length which compensates the movements of the introducing device (34).

9. Device according to claims 5 to 8, wherein the rigid pipeline system (5) has pipe bends (24), **characterized in that** a further tensioning air inlet (23) for tensioning the continuous thread (3) or roving is arranged at least behind one of the pipe bends (24).

10. Device according to claims 5 to 7 or 9, **characterized in that** the guide (5) has at least one conveying air inlet (22).

11. Device according to claims 7 and 10, **characterized in that** the end of the rigid pipeline system (6) has a telescopic tube (9) which, during set-up operation, can be moved as far as the subsequent funnel (10).

## Revendications

1. Procédé pour produire des pièces moulées en matière plastique renforcées de fibres longues (20), dans lequel on tire un fil sans fin (3) ou un stratifil depuis une bobine (2), on le convoie par un guidage (5) vers un système de coupe (12), on le coupe ici en tronçons finis formant des fibres longues (20), on amène ces fibres longues (20) via un tube de guidage (19) vers un flux (21) capable de s'écouler et formant une matière plastique rigide et on les réunit avec celui-ci, ce flux (21) étant introduit dans un outil de moulage (16, 17), celui-ci étant fermé et, après durcissement, la pièce moulée finie est démoulée, **caractérisé en ce que** le fil sans fin (3) ou le stratifil est en permanence maintenu sous tension par voie pneumatique dans le guidage (5) en sens opposé à la direction de convoyage.

2. Procédé selon la revendication 1, **caractérisé en ce que** le fil sans fin (3) est convoyé dans la première partie du guidage (5) dans un système de tubes rigides (6) et dans la deuxième partie de guidage (5) il continue d'être convoyé dans un système de conduites (11) déplacé avec un dispositif d'introduction commandé (7, 34), le fil sans fin (3) étant tendu dans ce système de conduites (11) uniquement par convoyage en direction d'un dispositif de convoyage (13) agencé sur le dispositif d'introduction (7, 34).

3. Procédé selon les revendications 1 ou 2, **caractérisé en ce que** le flux (21) formant une matière plastique rigide est amené sous la forme d'un mélange réactionnel liquide présentant une courte durée de démarrage de réaction.

4. Procédé selon les revendications 1, 2 ou 3, **caractérisé en ce que** le fil sans fin (3) est tiré à une vitesse de tirage d'au moins 2,0 m/s.

5. Dispositif pour produire des pièces moulées en matière plastique renforcées de fibres longues (20) dans un outil de moulage, constitué par un emplacement de montage (1) pour des bobines (2) de fils sans fin (3) ou de stratifils, à partir duquel un guidage (5) pour le fil sans fin (3) mène depuis l'emplacement de montage (1) jusqu'à un dispositif d'introduction (7, 34) à mouvement commandé pour un flux liquide (21) formant une matière plastique rigide et se termine au niveau d'un système de coupe (12) pourvu d'un dispositif de convoyage, le guidage (5) pour le fil sans fin (3) ou le stratifil étant constitué au moins partiellement par un système de tubes rigides (6), **caractérisé en ce que** le système de tubes rigides (6) comprend au moins une admission d'air de tensionnement (23), opposé à la direction de convoyage, pour le tensionnement pneumatique du fil sans fin (3) ou du stratifil.

6. Dispositif selon la revendication 5, **caractérisé en ce que** le guidage (5) du fil sans fin (3) ou du stratifil sur le dispositif d'introduction (7) à mouvement commandé est constitué par un tuyau de guidage flexible (11) qui se raccorde au système de tubes rigides (6).

7. Dispositif selon la revendication 5, **caractérisé en ce que** la partie du guidage (5) agencée sur le dispositif d'introduction (7) est séparée du système de tubes rigides (6) et **en ce que** son entrée comprend un entonnoir (10) dans lequel rentre le fil sans fin (3) pendant l'opération de remplissage du moule.

8. Dispositif selon la revendication 6, **caractérisé en ce que** le tuyau de guidage flexible (31) est relié au système de tubes rigides (32) et présente une longueur qui compense les mouvements du dispositif d'introduction (34).

9. Dispositif selon les revendications 5 à 8, dans lequel le système de tubes rigides (5) comprend des coudes tubulaires (24), **caractérisé en ce qu'**au moins en arrière de l'un des coudes tubulaires (24), il est prévu une autre admission d'air de tensionnement (23) pour tendre le fil sans fin (3) ou le stratifil.

10. Dispositif selon les revendications 5 à 7 ou 9, **caractérisé en ce que** le guidage (5) présente au moins une admission d'air de convoyage (22).

11. Dispositif selon les revendications 7 et 10, **caractérisé en ce que** l'extrémité du système de tubes rigides (6) comprend un tube télescopique (9) qui, en régime préparatoire, est déployable jusqu'à l'entonnoir successif (10).
